# EUROPEAN PATENT APPLICATION

(11) **EP 2 196 949 A2**
(43) Date of publication of application: **16.06.2010**
(21) Application number: 09176500.8
(22) Date of filing: 19.11.2009
(51) Int. Cl.: G06K 19/07

(54) **Radio-frequency identification unit**

(30) Priority: 28.11.2008 JP 2008304712
(71) Applicant: Fujitsu Limited, Kawasaki-shi, Kanagawa 211-8588 (JP); Fujitsu Frontech Limited, Inagi-shi, Tokyo 206-8555 (JP)
(72) Inventor: Baba, Shunji, Kawasaki-shi, Kanagawa 211-8588 (JP); Hashimoto, Shigeru, Inagi-shi, Tokyo 206-8555 (JP); Niwata, Tsuyoshi, Inagi-shi, Tokyo 206-8555 (JP); Ninomiya, Teruhisa, Kawasaki-shi, Kanagawa 211-8588 (JP); Kai, Manabu, Kawasaki-shi, Kanagawa 211-8588 (JP); Ohbayashi, Tetsuo, Kawasaki-shi, Kanagawa 211-8588 (JP); Nakamura, Norihiro, Kawasaki-shi, Kanagawa 211-8588 (JP); Oenoki, Hiroki, Kawasaki-shi, Kanagawa 211-8588 (JP)
(74) Representative: Kreutzer, Ulrich

(57) **Abstract**

A radio-frequency identification (RFID) unit includes a radio-frequency identification (RFID) tag configured to receive radio signals having a wavelength λ. A block has the top surface on which the radio-frequency identification tag is set. The block is made of a metallic material. The height of the block is set equal to or larger than one sixteenth the wavelength λ.

## Description

### FIELD

The embodiments discussed herein are related to a radio-frequency identification (RFID) unit including a radio-frequency identification (RFID) tag.

### BACKGROUND

A radio-frequency identification (RFID) tag such as a metal-attachable tag is well known. The RFID tag is attached to the surface of a metal plate, for example. The RFID tag includes an inlet. The inlet includes a semiconductor chip and an antenna wire connected to the semiconductor chip. Electric power is generated in the semiconductor chip in response to reception of radio signals through the antenna wire. The electric power enables the semiconductor chip to output predetermined radio signals, for example.
- Publication 1:: JP Patent Application Laid-open No. 2006-338361
- Publication 2:: JP Patent Application Laid-open No. 2006-039991
- Publication 3:: JP Patent Application Laid-open No. 2007-081028
- Publication 4:: JPUtility Model Registration No. 3134271

The inventors have made observations. If the metal plate does not have a surface area sufficiently larger than the area or extent of the RFID tag along a horizontal plane parallel to the surface of the RFID tag, the radio signals suffer from a considerable reduction in the gain in a predetermined direction within the horizontal plane, for example. As a result, in case where the surface area of the metal plate is not sufficiently large along the horizontal plane, the users may suffer from a deteriorated usability of the RFID tag. The RFID tag is only applicable to a limited location for the attachment.

### SUMMARY

According to an aspect of the invention, a radio-frequency identification unit comprising: a radio-frequency identification tag configured to receive radio signals having a wavelength λ; and a block made of a metallic material, the block having a top surface on which the radio-frequency identification tag is set, wherein the height of the block is set equal to or larger than one sixteenth the wavelength λ.

The object and advantages of the embodiments will be realized and attained by means of the elements and combinations particularly pointed out in the appended claims. It is to be understood that both the foregoing general description and the following detailed description are exemplary and explanatory and are not restrictive of the embodiments, as claimed.

### BRIEF DESCRIPTION OF THE DRAWINGS

FIG. 1 is a perspective view schematically illustrating a radio-frequency identification (RFID) system;
FIG. 2 is an enlarged perspective view schematically illustrating a tag assembly coupled to support shaft of a radio-frequency identification (RFID) unit;
FIG. 3 is an enlarged perspective view schematically illustrating the structure of the tag assembly;
FIG. 4 is a partial sectional view taken along the line 4-4 in FIG. 3;
FIG. 5 is a perspective view illustrating the dimension of a radio-frequency identification (RFID) tag;
FIG. 6 is a perspective view illustrating the dimension of a first metal plate;
FIG. 7 is a perspective view illustrating the dimension of a second metal plate;
FIG. 8 is a perspective view illustrating the dimension of the tag assembly;
FIG. 9 is a perspective view illustrating the dimension of the RFID unit;
FIG. 10 is a graph depicting a gain according to the comparative example 1;
FIG. 11 is a graph depicting a gain according to the comparative example 2;
FIG. 12 is a graph depicting a gain according to the comparative example 3;
FIG. 13 is a graph depicting a gain according to the specific example 1;
FIG. 14 is a graph depicting a gain according to the specific example 2;
FIG. 15 is a perspective view illustrating the dimension of the tag assembly;
FIG. 16 is a graph depicting the relationship of the minimum gain to the dimension of the block;
FIG. 17 is a perspective view illustrating the dimension of the RFID unit;
FIG. 18 is a graph depicting the relationship of the minimum gain to the diameter of the support shafts;
FIG. 19 is a perspective view illustrating a cover according to a specific example;
FIG. 20 is a partial sectional view taken along the line 20-20 in FIG. 19;
FIG. 21 is a partial sectional view, corresponding to FIG. 20, illustrating a cover according to another specific example; and
FIG. 22 is a partial sectional view, corresponding to FIG. 20, illustrating a cover according to still another specific example.

### DESCRIPTION OF EMBODIMENTS

Embodiments of the present invention will be explained below with reference to the accompanying drawings.

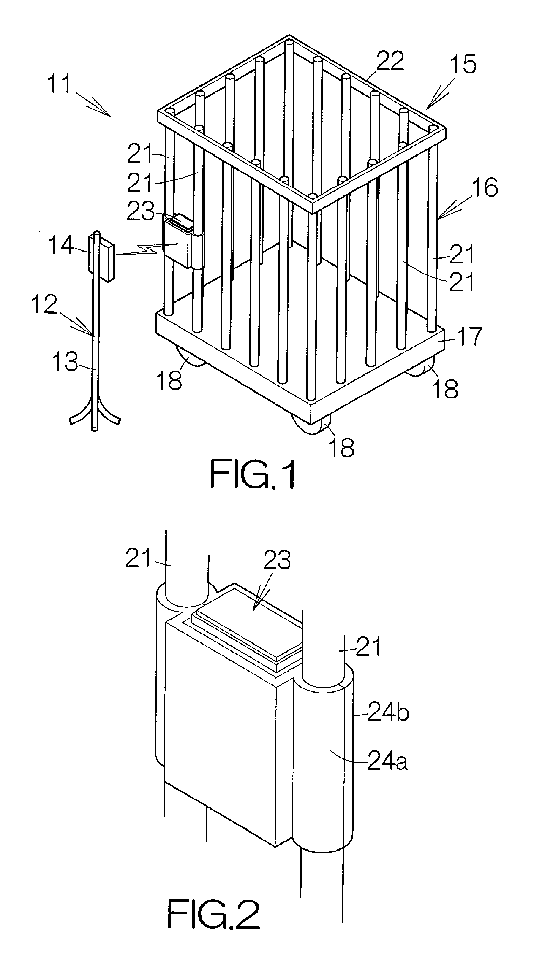

FIG. 1 schematically depicts a radio-frequency identification (RFID) system 11 according to a specific example. The RFID system 11 includes an antenna device 12. The antenna device 12 includes a stand 13 standing upright from the floor. An antenna 14 is attached to the stand 13. The antenna 14 is located at a predetermined level above the floor. The antenna 14 is configured to transmit and receive radio signals within a predetermined communication distance. A reader/writer, not depicted, is connected to the antenna 14. The reader/writer is configured to read radio waves, namely radio signals, received through the antenna 14. It should be noted that the reader/writer may be embedded in the antenna 14. The frequency range of the radio signals is set at 950MHz in the UHF (Ultra-High Frequency) band, for example.

The RFID system 11 includes a radio-frequency identification (RFID) unit 15. The RFID unit 15 includes a cart 16. Casters 18 are attached to the bottom plate 17 of the cart 16 so that the cart 16 is movable on the floor. Support shafts 21 stand upright in the vertical direction on the upper surface of the bottom plate 17 of the cart 16. A frame 22 is utilized to connect the support shafts 21 together. The bottom plate 17, the support shafts 21 and the frame 22 are made of a metallic material such as iron (Fe), for example. The individual support shaft 21 is an iron pipe defining a hollow space therein, for example. The diameter of the support shafts 21 is set equal to or larger than 10mm, for example. In particular, the diameter of the support shafts 21 is preferably set equal to or larger than 20mm. Here, the diameter of the support shafts 21 is set at 25mm, for example.

A tag assembly 23 is attached to a specific pair of the support shafts 21, 21. The tag assembly 23 is configured to transmit and receive predetermined radio signals to and from the antenna 14. Referring also to FIG. 2, a pair of attachment members 24a, 24b is utilized to attach the tag assembly 23. The attachment members 24a, 24b sandwich the tag assembly 23 and the support shafts 21, 21 therebetween in the horizontal direction. Screws, not depicted, may be utilized to fix the attachment members 24a, 24b to the support shafts 21, for example. Simultaneously, the tag assembly 23 may be fixed to at least one of the attachment members 24a, 24b. The attachment members 24a, 24b are made of a resin material, for example.

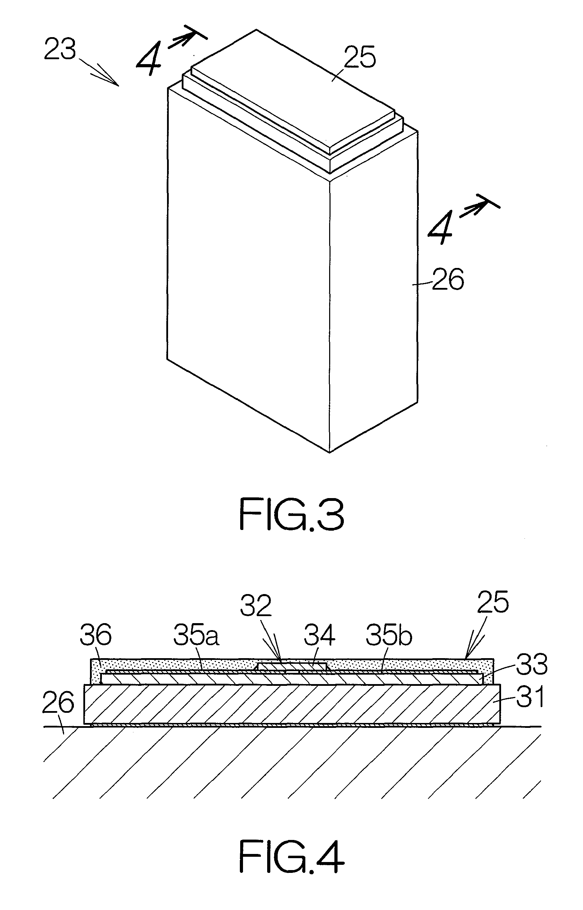

As depicted in FIG. 3, the tag assembly 23 includes a radio-frequency identification (RFID) tag 25. The RFID tag 25 has the height of 5mm, the width of 50mm and the depth of 25mm. The RFID tag 25 will be described later in detail. The RFID tag 25 is received on the top surface of a block 26 in the form of a rectangular parallelepiped, for example. The block 26 is made of a metallic material such as iron (Fe), for example. Here, the block 26 is made of six metal plates, three pairs of parallel metal plates opposed to each other, for example. The metal plates are iron plates, for example. The block 26 is thus formed as a box defining a hollow space inside, for example. The height of the block 26 is set equal to or larger than one sixteenth the wavelength λ of the radio signals. In particular, the height of the block 26 is preferably set equal to or larger than one eighth the wavelength λ of the radio signals. Here, the height of the block 26 is set at 80nm, for example. Likewise, the width and depth of the block 26 are set at 55mm and 30mm, respectively.

As depicted in FIG. 4, the RFID tag 25 includes a plate-shaped support body 31. The support body 31 is made of a resin material, for example. The resin material includes a dielectric material such as an ABS (acrylonitrile-butadiene-styrene) resin, a polycarbonate resin, or the like. An adhesive is employed to bond the support body 31 to the top surface of the block 26, for example. An inlet 32 is placed on the support body 31. The inlet 32 includes a thin plate-shaped base 33. The thin plate-shaped base 33 is made of a resin material such as polyethylene terephthalate (PET), for example. An electronic component, namely a semiconductor chip 34, is mounted on the surface of the thin plate-shaped base 33. An adhesive is utilized to fix the semiconductor chip 34 to the thin plate-shaped base 33, for example. A radio transmitter/receiver circuit, logic circuit and a memory are incorporated in the semiconductor chip 34, for example. Predetermined information is held in the memory. The semiconductor chip 34 is made of silicon, for example.

A pair of antenna wires 35a, 35b is mounted on the surface of the thin plate-shaped base 33. The antenna wires 35a, 35b in combination establish a patch antenna. The antenna wires 35a, 35b are made of a copper (Cu) foil, for example. Electrical connection is established between one ends of the antenna wires 35a, 35b and the semiconductor chip 34. The antenna wires 35a, 35b linearly extend from the semiconductor chip 34 in the opposite directions to each other. Electric power is generated in the semiconductor chip 34 in response to reception of radio waves through the antenna wires 35a, 35b. The semiconductor chip 34 utilizes the electric power to execute a predetermined operation. The information held in the memory is transmitted from the antenna wires 35a, 35b, for example. A plate-shaped sealing piece 36 airtightly covers over the inlet 32 on the surface of the substrate 33. The sealing piece 36 is made of a resin material, for example.

The antenna device 12 functions as a gate in the RFID system 11. When the cart 16 passes in front of the gate, radio signals are transmitted from the antenna 14 to the RFID tag 25. Electric power is generated in the RFID tag 25 in response to reception of the ratio signals. As a result, the semiconductor chip 34 outputs the information held in the memory for radio signals. The antenna 14 receives the transmitted radio signals. The reader/writer obtains the information represented by the radio signals. The information includes the identification information of the cart 16 and the identification information of a package or packages in the cart 16, for example. The RFID system 11 can thus be utilized for a distribution system, particularly for an inventory control, for example.

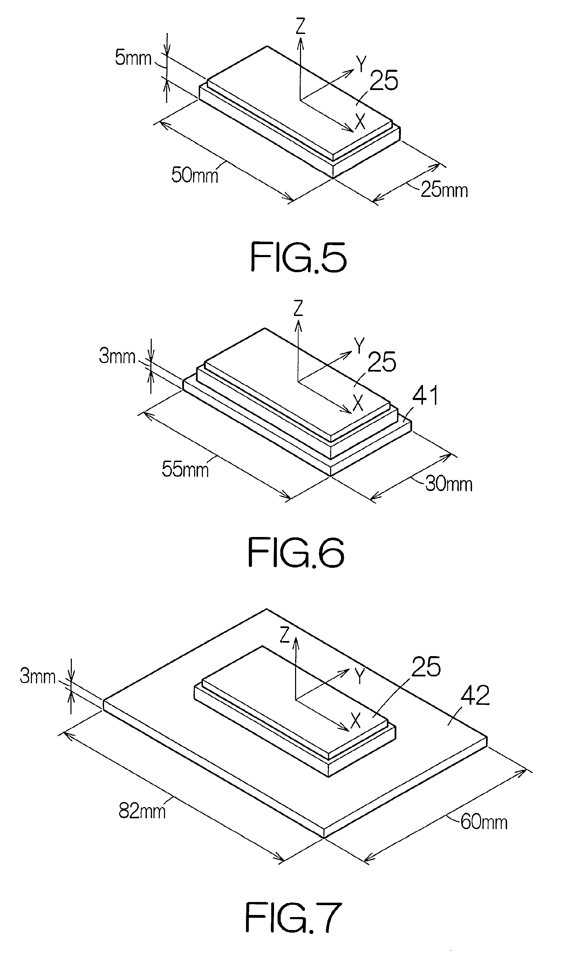

The inventors observed the effects of the embodiment. A simulation was performed for the observation. The inventors prepared specific examples 1 and 2 and comparative examples 1, 2 and 3. The frequency range of radio signals was set at a UHF band (950MHz). The comparative example 1 was the aforementioned RFID tag 25 itself, as depicted in FIG. 5. The RFID tag 25 had the height of 5mm, the width of 50mm and the depth of 25mm. The comparative example 2 was the RFID tag 25 located on a first metal plate 41, as depicted in FIG. 6. The first metal plate 41 had the thickness of 3mm, the width of 55mm and the depth of 30mm. The comparative example 3 was the RFID tag 25 located on a second metal plate 42, as depicted in FIG. 7. The second metal plate 42 had the thickness of 3mm, the width of 82mm and the depth of 60mm.

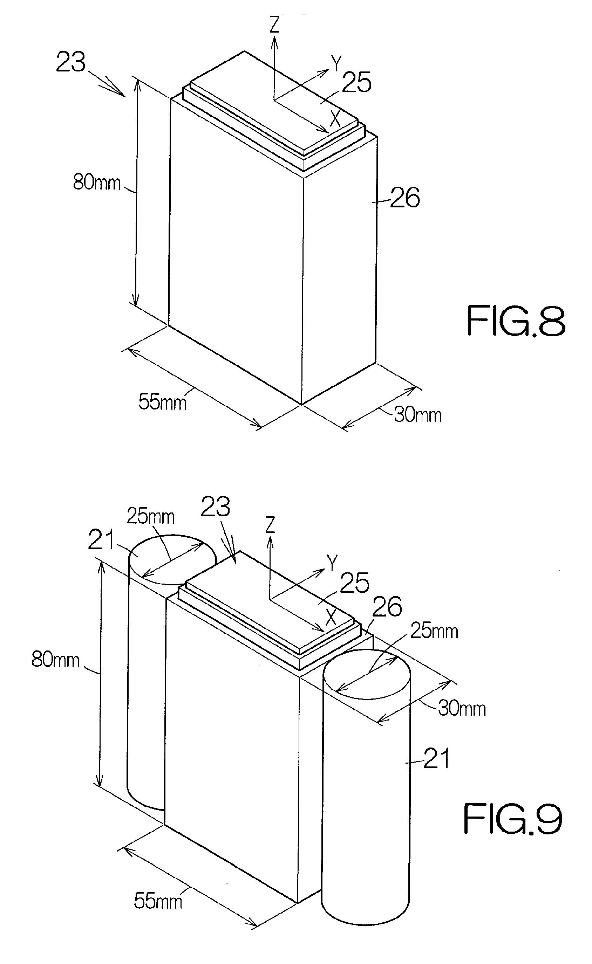

The specific example 1 was the aforementioned tag assembly 23, as depicted in FIG. 8. The block 26 had the height of 80mm, the width of 55mm and the depth of 30mm. The specific example 2 was the tag assembly 23 coupled with a pair of the support shafts 21, as depicted in FIG. 9. The support shafts 21 were placed to extend along the parallel side surfaces of the tag assembly 23, namely of the block 26, respectively. The height of the support shafts 21 was set at 80mm. The diameter of the support shafts 21 was set at 25mm. As is apparent from FIGs. 5-9, the models were established in a predetermined three-dimensional coordinate (XYZ) system. The x-axis and y-axis were established within a horizontal plane parallel to the surface of the RFID tag 25. The z-axis was set within a vertical plane perpendicular to the surface of the RFID tag 25.

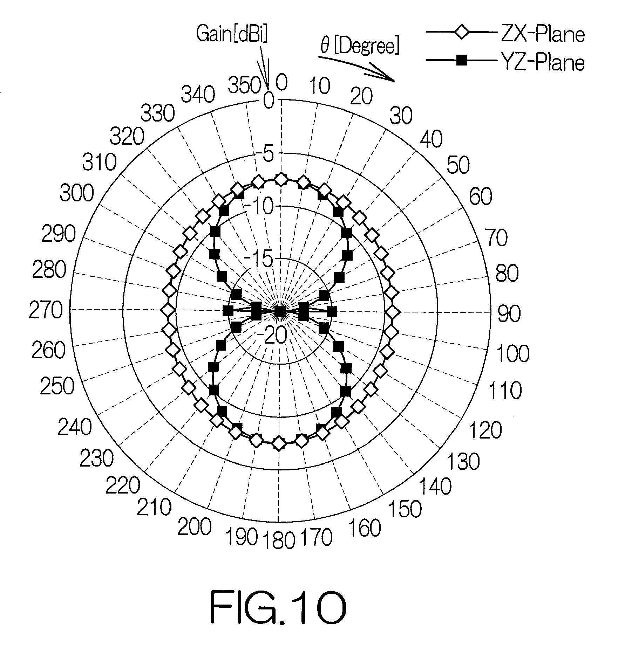

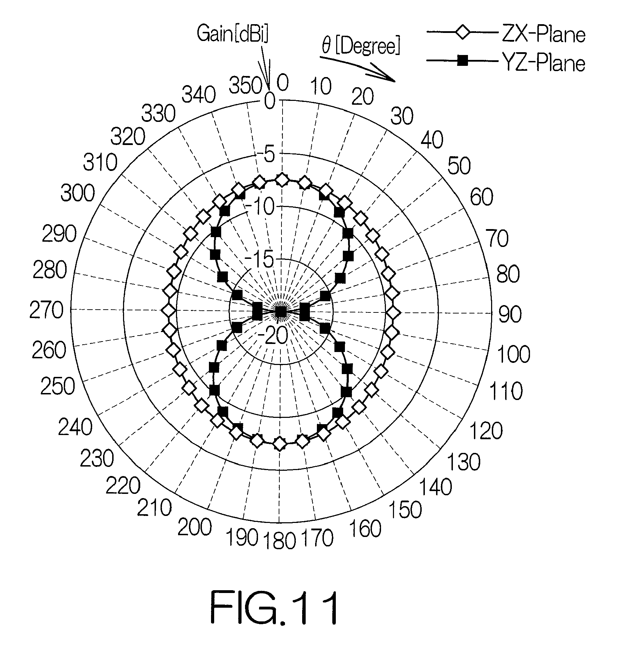

The inventors calculated the gains [dBi] of radio signals transmitted from the RFID tag 25 in accordance with the aforementioned models. The gains were calculated in the zx-plane and yz-plane. As a result, the comparative example 1 experienced a relatively small gain in the direction of y-axis in the yz-plane, as depicted in FIG. 10. It has been found that it is difficult to establish transmission or reception of radio signals in the direction of y-axis. The maximum gain was -7.5[dBi] approximately. The comparative example 2 experienced a gain similar to that of the comparative example 1, as depicted in FIG. 11, even though the RFID tag 25 was located on the metal plate 41. The comparative examples 1 and 2 experienced the symmetry of the gain distribution in the zx-plane and the yz-plane, respectively. In this case, the xy-plane, including the axis extending on the radial lines of 90 degrees and 270 degrees, serves as a symmetry axis.

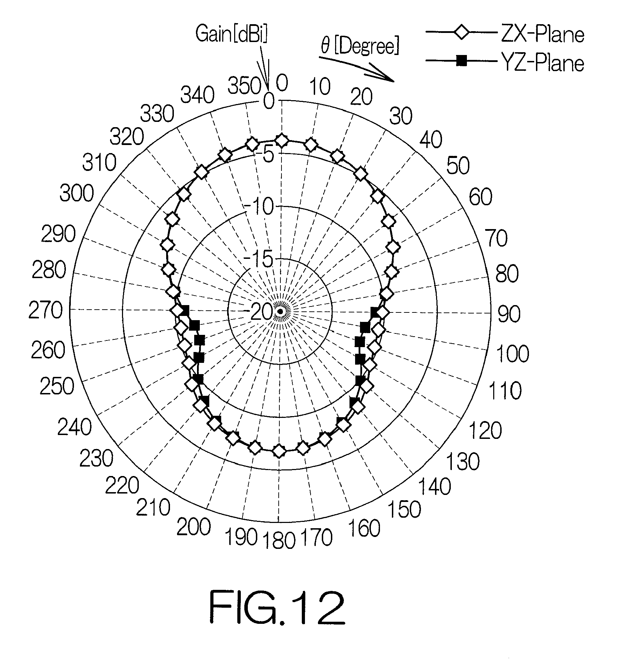

The comparative example 3 experienced a relatively large gain in the direction of y-axis in the yz-plane with the assistance of the metal plate 42, as depicted in FIG. 12. The maximum gain reached -4[dBi] approximately. The comparative example 3 is supposed to enjoy a sufficient transmission and reception of radio signals in all the directions of x-axis, y-axis and z-axis. However, the comparative example 3 requires the use of the metal plate 42 which has a larger area or extent along the xy-plane, resulting in a considerably limited attachment position of the RFID tag 25 and the metal plate 42. In this case, the comparative example 3 experienced disappearance of the symmetry of the gain distribution, relative to the xy-plane, in the zx-plane and yz-plane. In other words, it can be said that the disappearance of the symmetry contributes to a reliable establishment of radio communication in all the directions, namely the directions of x-axis, y-axis and z-axis.

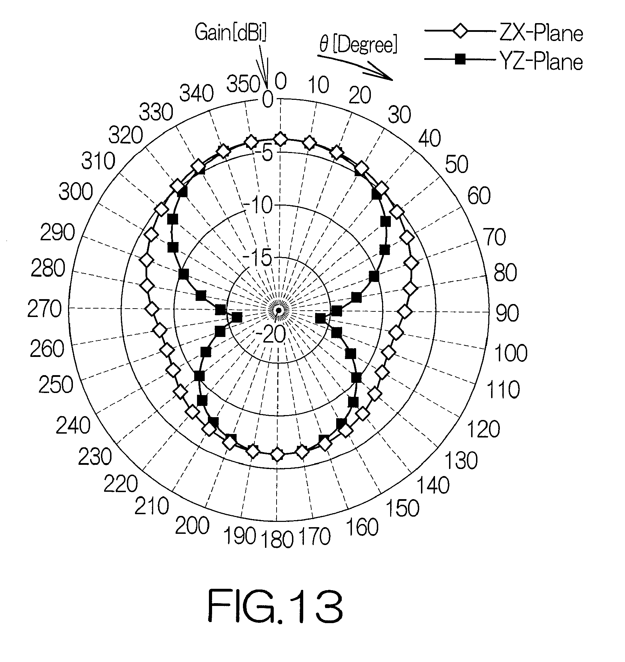

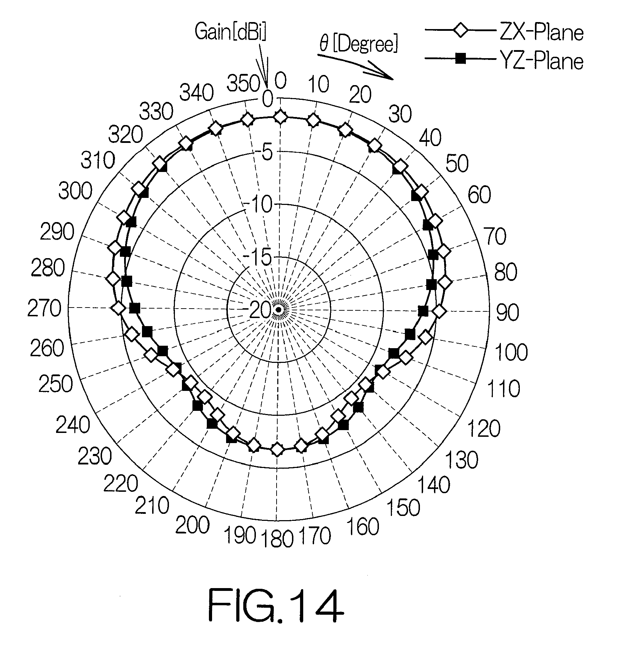

On the other hand, the specific example 1 experienced a predetermined gain in the direction of y-axis in the yz-plane, as depicted in FIG. 13. Transmission of radio signals was established in all the directions of x-axis, y-axis and z-axis. In addition, the maximum gain reached -4[dBi] approximately. The area of the top surface of the block 26 within the xy-plane in the specific example 1 was set equal to that of the surface of the metal plate 41 of the comparative example 2. It has been found, based on the comparison between the specific example 1 and the comparative example 2, that an increase in the thickness or height of the metal plate 41 in the direction of z-axis improves the performance of the transmission or reception of radio signals. As depicted in FIG. 14, the specific example 2 enjoyed a still larger gain in the direction of y-axis in the yz-plane. The specific example 2 enjoyed a gain larger than that of the specific example 1 in the direction of y-axis. The maximum gain reached -2[dBi] approximately. It has been found that the support shafts 21 serve to further improve the performance of the transmission or reception of radio signals as compared with in the specific example 1. It has also been found that a larger gain can be obtained as compared with a case of using the metal plate 42. The specific examples 1 and 2 enjoyed the disappearance of the symmetry of the gain distribution in the zx-plane and the yz-plane, as is apparent from FIGs. 13 and 14.

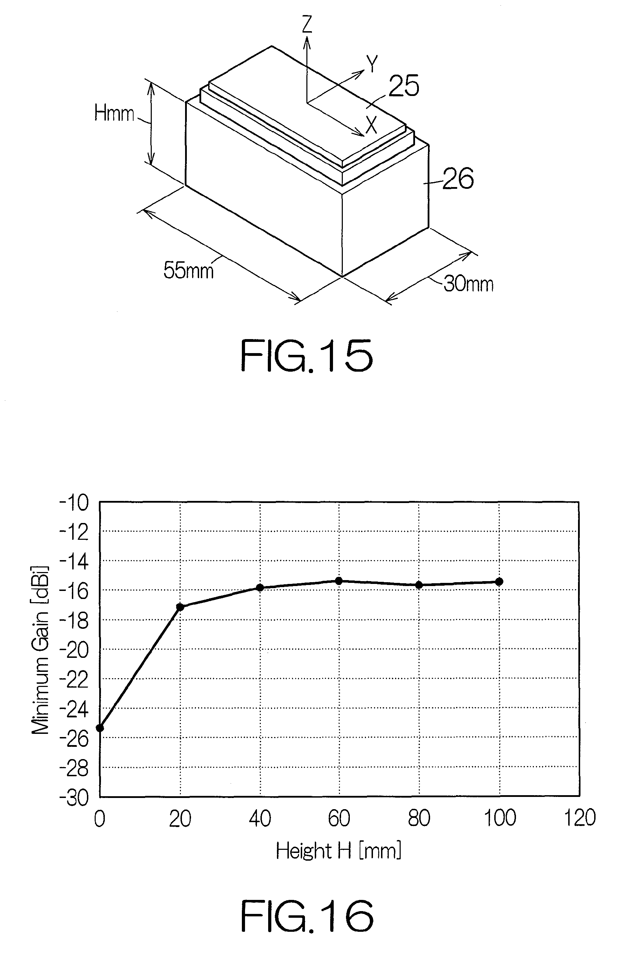

The inventors observed the minimum gain [dBi] as the height of the block 26 was changed in the tag assembly 23. The frequency range of radio signals was set at a UHF band (950MHz). As depicted in FIG. 15, the block 26 had the width of 55mm and the depth of 30mm. The minimum gain was calculated in the xy-plane as the height *H* of the block 26 was changed. As a result, as depicted in FIG. 16, when the height *H* was set equal to or larger than 20mm, the minimum gain considerably increased as compared with a case without the block 26, specifically having the height *H*=0. Consequently, it has been found that the gain increases by setting the height *H* at 20mm or higher. In particular, when the height *H* was set at 40mm or higher, the calculated minimum gains were almost constant.

Considering the results of the observations, it has been found that when the frequency was set at 950MHz, for example, the height *H* of the block 26 is preferably set equal to or larger than one sixteenth the wavelength λ of the radio signals, that is, 19.7mm approximately. In particular, when the height *H* is set equal to or larger than one eighth the wavelength λ, that is, 39.5mm approximately, the minimum gain is most improved. Consequently, when the height *H* is set equal to or larger than one sixteenth the wavelength λ, it is assumed that the symmetry of the gain distribution disappears, as depicted in aforementioned FIG. 13, for example. As a result, a predetermined gain can be ensured in the direction of y-axis. It should be noted that the height *H* may be adjusted depending on the frequency of the radio signals employed in the RFID system 11.

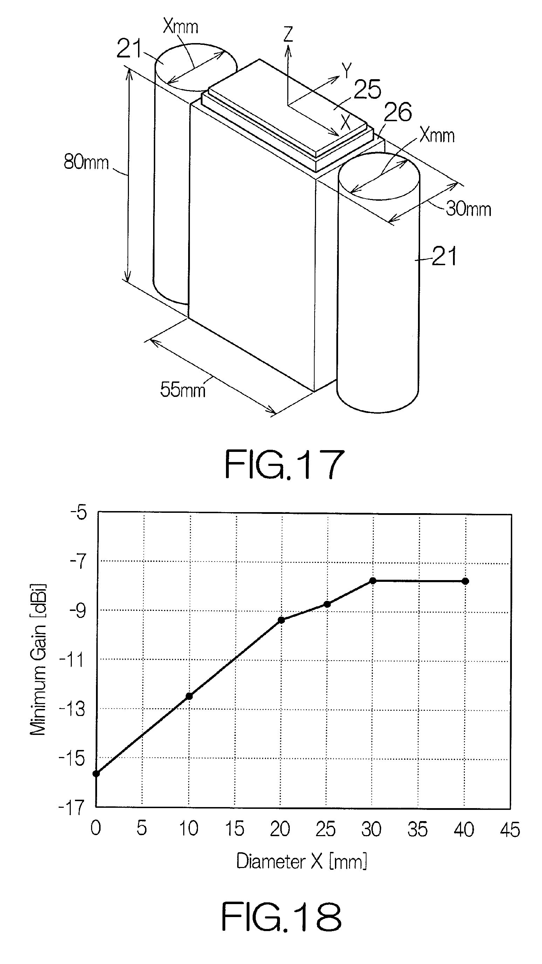

Likewise, the inventors observed the minimum gain [dBi] as the height of the support shafts 21 was changed. The support shafts 21, 21 were located to extend along the side surfaces of the block 26 in contact with the side surface of the block 26, respectively. As depicted in FIG. 17, the block 26 had the height of 80mm, the width of 55mm and the depth of 30mm. The height of the support shafts 21 was set at 80mm. The minimum gain was calculated in the xy-plane as the diameter *X* of the support shafts 21 was changed. As depicted in FIG. 18, when the diameter *X* was set at 10mm, the minimum gain improved by 3[dBi] approximately as compared with the case of block 26 without the support shafts 21, specifically having the diameter *X*=0. In particular, when the diameter *X* was set equal to or larger than 20mm, the minimum gain considerably improved. Consequently, it has been found that the diameter *X* is preferably set equal to or larger than 10mm. In particular, it has been found that the diameter *X* is more preferably set equal to or larger than 20mm. Specifically, the diameter *X* of the support shafts 21 is set equal to or larger than one thirty-second the wavelength λ. The diameter *X* of the support shafts 21 is more preferably set equal to or larger than one sixteenth the wavelength λ.

The height *H* of the block 26 is set equal to or larger than the one sixteenth the wavelength λ in the RFID unit 15. As a result, the RFID tag 25 is allowed to enjoy transmission and reception of radio signals in all the directions, namely along the x-axis, y-axis and z-axis. In addition, a simple increase in the height *H* of the block 26 enables such a reliable establishment of transmission and reception of radio signals. Variation of the attachment position of the tag assembly 23 is considerably enhanced as compared with the case in which the area of the top surface of the block 26 is increased. The tag assembly 23 can be placed between the support shafts 21 of the cart 16, for example. Moreover, when the support shafts 21 are placed on the side surfaces of the tag assembly 23, the gain enhances. The performance of the radio transmission and reception can thus be considerably improved.

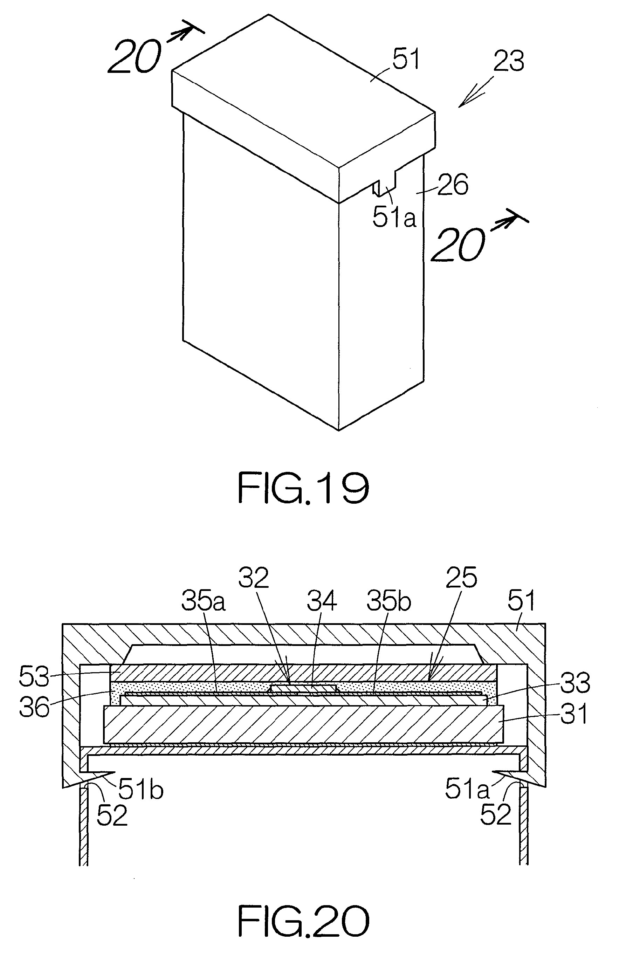

As depicted in FIG. 19, a cover 51 may be attached to the tag assembly 23. The cover 51 is made of a resin material, for example. Referring also to FIG. 20, claws 51a, 51b are formed in the cover 51. The claws 51a, 51b protrude inward from the lower ends of the parallel side plates of the cover 51, respectively. The claws 51a, 51b extend to get closer to each other. The claws 51a, 51b are engaged with openings or grooves 52, 52 formed in the side plates of the block 26, respectively, for example. The RFID tag 25 defines a space between the cover 51 and the top surface of the block 26. A damping member 53 is interposed between the surface of the RFID tag 25 and the top plate of the cover 51. The damping member 53 endlessly extends along the outer periphery of the RFID tag 25 to surround the RFID tag 25, for example. The damping member 53 is made of a resin material such as rubber or sponge, for example. Like reference numerals are attached to the structure or components equivalent to those of the aforementioned ones. The cover 51 serves to prevent the RFID tag 25 from exposure to moisture such as rainwater. As a result, the RFID tag 25 is prevented from a reduction of the transmission distance resulting from moisture.

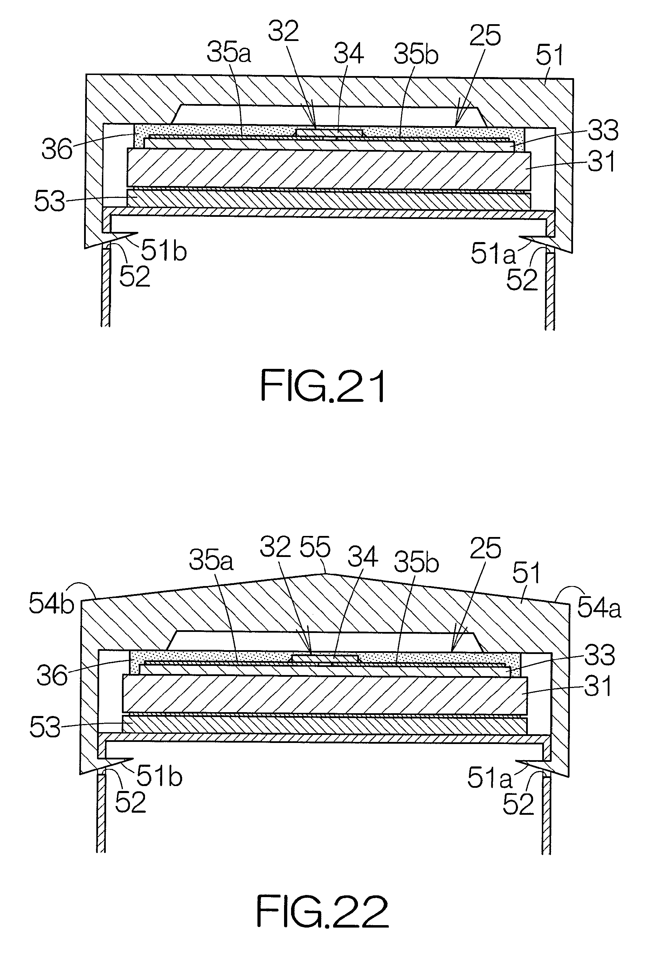

When the cover 51 is attached to the block 26, the cover 51 is moved downward toward the tag assembly 23 from a position far above the tag assembly 23. Since the claws 51a, 51b are elastically deformable, the claws 51a, 51b are urged against the side surfaces of the block 26. When the tag assembly 23 is forced to reach a position where the cover 51 fully covers the tag assembly 23, the claws 51a, 51b are received in the openings 52, 52, respectively. Simultaneously, the top plate of the cover 51 is urged against the RFID tag 25. Since the damping member 53 is interposed between the cover 51 and the RFID tag 25, the damping member 53 serves to absorb the urging force from the top plate of the cover 51. In this manner, the cover 51 is attached to the block 26, namely the tag assembly 23. It should be noted that the damping member 53 may be interposed between the RFID tag 25 and the block 26, as depicted in FIG. 21. In this case, the damping member 53 may be formed in a sheet in the shape of a flat parallelepiped, for example.

As depicted in FIG. 22, a pair of inclined surfaces 54a, 54b may be formed on the top plate of the cover 51. The inclined surfaces 54a, 54b connect to each other at an edge 55. The edge 55 is defined to extend in parallel with the top surface of the block 26. The closer to the edge 55 the inclined surfaces 54a, 54b gets, the farther from the top surface of the block 26 the inclined surfaces 54a, 54b gets. The edge 55 is located at the farthest position from the top surface of the block 26 in the top plate of the cover 51. Like reference numerals are attached to the structure or components equivalent to those of the aforementioned ones. Even if the top plate of the cover 51 is exposed to rainwater, the rainwater flows outward from the contour of the cover 51 along the inclined surfaces 54a, 54b. As a result, no rainwater remains on the top plate of the cover 51. The RFID tag 25 is prevented from a reduction of the transmission distance resulting from moisture.

All examples and conditional language recited herein are intended for pedagogical purposes to aid the reader in understanding the invention and the concept contributed by the inventors to furthering the art, and are to be construed as being without limitation to such specifically recited examples and conditions, nor does the organization of such examples in the specification relate to a showing of the superiority and inferiority of the invention. Although the embodiments of the present inventions have been described in detail, it should be understood that the various changes, substitutions, and alterations could be made hereto without departing from the spirit and scope of the invention.

## Claims

1. A radio-frequency identification unit (15) comprising:
a radio-frequency identification tag (25) configured to receive radio signals having a wavelength λ; and
a block (26) made of a metallic material, the block having a top surface on which the radio-frequency identification tag is set, wherein
a height of the block is set equal to or larger than one sixteenth the wavelength λ.

2. The radio-frequency identification unit according to claim 1, wherein the block is formed in a shape of a rectangular parallelepiped.

3. The radio-frequency identification unit according to claim 1 or 2, further comprising a pair of support shafts (21) holding the block (26) therebetween, the support shafts being made of a metallic material.
